# EUROPEAN PATENT SPECIFICATION

(11) **EP 3 448 211 B1**
(45) Date of publication and mention of the grant of the patent: **30.10.2019**
(21) Application number: 17720126.6
(22) Date of filing: 28.04.2017
(51) Int. Cl.: A47J 27/00, A47J 43/046

(54) **A DOMESTIC FOOD PROCESSING APPARATUS AND METHOD**
HAUSHALTS-LEBENSMITTELVERARBEITUNGSVORRICHTUNG UND -VERFAHREN
APPAREIL ET PROCÉDÉ DE TRAITEMENT ALIMENTAIRE DOMESTIQUE

(30) Priority: 13.05.2016 WO PCT/CN2016/082049; 19.08.2016 EP 16184947
(43) Date of publication of application: 06.03.2019
(73) Proprietor: Koninklijke Philips N.V., 5656 AE Eindhoven (NL)
(72) Inventor: CHEN, Yun, 5656 AE Eindhoven (NL); LU, Weihua, 5656 AE Eindhoven (NL); SUN, Wen, 5656 AE Eindhoven (NL); SU, Guangming, 5656 AE Eindhoven (NL); CHEN, Huangli, 5656 AE Eindhoven (NL)
(74) Representative: de Vries, Janna
(86) International application number: PCT/EP2017/060151
(87) International publication number: WO 2017/194327

(56) References cited:
- WO-A1-2013/035029
- DE-A1-102010 000 299
- DE-A1-102015 101 250

## Description

### FIELD OF THE INVENTION

This invention relates to a domestic food processing apparatus, such as a blender or juicer.

### BACKGROUND OF THE INVENTION

Fresh juices, made of fresh vegetables, fruits or both combined, are considered very healthy and natural. In particular a high vitamin C content is of interest.

Various domestic kitchen appliances are known for extracting juice, including juicers and blenders. In the field of domestic appliances, blenders and juicers are usually used to make fresh juice for immediate consumption. During blending and/or juicing, plant tissues, and even plant cells are disrupted. In the presence of oxygen, vitamin C (also called ascorbic acid) is oxidized into dehydroascorbic acid (DHA) when it is catalyzed by the endogenous enzyme ascorbate oxidase, that is rich in most vegetables and fruits. It has been reported that the catalyzed oxidative pathway of ascorbic acid degradation caused by ascorbate oxidase is one important reaction pathway for loss of vitamin C in foods. Normally, this enzyme exhibits maximum activity at 40 degrees Celsius, and is almost completely inactivated at 65 degrees Celsius.

Blenders are well known for creating smoothies with milk / yoghurt and fruit, and have rotating blades that move very quickly to chop the food not leaving anything behind. One of the concerns for blenders is that a high speed rotor extraction raises the temperature to a certain temperature range (such as 20 to 30 degrees Celsius). After cell rupture due to blending or juicing, vitamin C contacts with ascorbate oxidase, and is then easily decomposed at this temperature range. This temperature range is responsible for more complete activation of ascorbate oxidase, and the result is that a large portion of the vitamin C is destroyed.

There are also fast and slow juicing methods and corresponding appliances.

Fast juicers are used to make juice from fruits and vegetables through a process that separates pulp and seeds. The latest in the series of electric juicers are centrifugal juicers that first cut the fruit into pieces and then spin the pieces to produce their juice, which also will destroy parts of the vitamin C content, as well as resulting in some heating as mentioned above in connection with blenders.

Slow juicers make fresh juice with cold extraction, which can keep more vitamin C. However, in both types of juicer, vitamin C will meet ascorbate oxidase during processing or afterwards, so that vitamin C will be oxidized at room temperature.

Thus, for freshly made juice, much of the vitamin C has often been destroyed during processing and the remains will be destroyed soon afterwards. The fresh juice cannot be kept because at room temperature the ascorbate oxidase will keep acting.

There is therefore a need for a food processing apparatus and method which retains a high level of vitamin C in the processed food, and which can be implemented with sufficient simplicity and low cost that it is suitable for use in a domestic kitchen appliance.

WO 2013/035029 discloses a puree preparation device which makes use of heating to deactivate enzymes which speed up the loss of vitamin C.

### SUMMARY OF THE INVENTION

The invention is defined by the claims.

According to examples in accordance with an aspect of the invention, there is provided a domestic apparatus, comprising:
a vessel for receiving food for processing;
a rotary processing element mounted in the vessel;
a motor for driving the rotary processing element;
a heating system;
a temperature sensor;
an ultrasonic vibration arrangement for vibrating the food; and
a controller,
wherein the controller is adapted to control the heating system to provide a food temperature in the range 50.0 to 75.0 degrees Celsius during or immediately after processing.

In this domestic appliance, food such as fruit or vegetables may be processed. The processing for example comprises blending or juicing. When blending, pulp is retained for improved health benefits, when compared to a juicing process. However, either process may be used. The heating process is used to deactivate ascorbate oxidase so that it does not break down vitamin C during juicing or blending or after the fruit or vegetables have been blended or juiced. The temperature is high enough to provide deactivation of the ascorbate oxidase but not so high as to destroy the vitamin C by overheating.

The food is typically processed for immediate consumption in a domestic apparatus. Discoloration of the food over prolonged time periods is therefore not an issue, and the focus is on the preservation of vitamin C in the food.

It is well known, and accepted, that vitamin C is sensitive to heating, so that the common practice is to avoid heating if vitamin C levels are to be preserved. The invention is based on the realization that at low temperature ranges, enzymatic-degradation, which is induced by ascorbate oxidase, plays a more dominant role once it has been activated. By heating up to a temperature within a certain range, meanwhile, beyond the active temperature ranges of ascorbate oxidase, the beneficial effect of deactivating the ascorbate oxidase outweighs the negative effect of the heating degradation on the vitamin C.

The invention for example provides a process for making fresh juice, by controlling at least the temperature (but optionally also controlling stirring or vibration and treatment time) to retain more vitamin C and without compromising on the taste. The invention is suitable for juicing and blending.

The ultrasonic vibration functions to create a turbulent effect in the food as well as providing heating of the food (either functioning as the heating system or else providing further heating). The turbulent effect, in particular the resulting high shear forces and pressures, has the benefit of partially destroying ascorbate oxidase activity through mechanical processes in addition to the temperature dependent effects. The ultrasonic vibration arrangement is for example used in combination with other heating such as resistive heating. The turbulent effect also provides a stirring effect.

The controller may be is adapted to control the heating system to provide a food temperature in the range 60.0 to 70.0 degrees Celsius.

Different temperatures may be appropriate for different foods. A lower maximum temperature avoids destruction of vitamin C by overheating, but may result in incomplete deactivation of the ascorbate oxidase, which then destroys the vitamin C.

The controller may be adapted to control the heating system to provide heating during a heating time of 2 to 5 minutes to enable the deactivation of the ascorbate oxidase, and thereby assist in retaining the maximum possible levels of vitamin C. The maximum time is selected to prevent overheating, and also because there is a maximum duration of the food processing task.

The apparatus may further comprise a cooling system for cooling the processed food after the heating process.

The cooling process makes the processed food ready for consumption. The cooling system may for example comprise a semiconductor cooler.

The ultrasound system may comprise an ultrasound transducer coupled to the vessel.

Ultrasound transducers can be made very small and thin so that they may for example be built in to the inside wall of the vessel of the apparatus, and close to the food processing area. The food processing element processes the food, and the cavitation produced by the ultrasound system will inactivate ascorbate oxidase with the assistance of the heating.

The controller may be adapted to control the ultrasonic vibration arrangement in a pulsed mode. This avoids local high temperatures in the food.

The heating system may comprise a resistive heater. This provides an easily controllable heating arrangement. There may instead be a combination of ultrasound heating/vibration and resistive heating.

The resistive heater is for example coupled to the rotary processing element. In this way, heating takes place as part of the processing. The processing element may be slowed after processing is complete to perform a stirring function, so that stirred heating is implemented.

The vessel may have a volume of between 0.6 and 2.0 liters. This is commensurate with a domestic food processing apparatus.

Examples in accordance with a second aspect of the invention provide a food processing method for implementation by a domestic apparatus, comprising:
driving a rotary food processing element within a vessel which contains the food to be processed;
heating the food to provide a food temperature in the range 50.0 to 75.0 degrees Celsius during or immediately after processing thereby to inactivate ascorbate oxidase by heating; and
vibrating the food using an ultrasonic vibration arrangement (28, 30).

This method finds a balance between preventing destruction of vitamin C by heating and deactivating ascorbate oxidase to prevent destruction of the vitamin C.

The food temperature may be in the range 60.0 to 70.0 degrees Celsius. The heating system may be controlled to provide heating during a heating time of 2 to 5 minutes.

The method may further comprise cooling the blended food after the heating process.

The heating may be by using said ultrasonic vibration of the food and/or using resistive heating of the food using a resistive heater. The method is for example for processing a volume of food of between 0.6 and 2.0 liters.

### BRIEF DESCRIPTION OF THE DRAWINGS

Examples of the invention will now be described in detail with reference to the accompanying drawings, in which:
Fig. 1 shows a food processing apparatus;
Fig. 2 shows a food processing method;
Fig. 3 shows first experimental results to show the retention of vitamin C under different conditions;
Fig. 4 shows second experimental results to show the retention of vitamin C under different conditions; and
Fig. 5 shows third experimental results to show the retention of vitamin C under different conditions.

### DETAILED DESCRIPTION OF THE EMBODIMENTS

The invention provides a domestic food processing apparatus for rotary food processing, in which a food temperature is controlled to be in the range 50.0 to 75.0 degrees Celsius during or immediately after processing. Food such as fruit or vegetables may be processed, for example blended or juiced. The heating process is used to deactivate ascorbate oxidase so that it does not break down vitamin C during the juicing or blending or after the fruit or vegetables have been blended or juiced. The temperature is high enough to provide deactivation of the ascorbate oxidase but not so high as to destroy the vitamin C by overheating.

An ultrasound system is used to generate heat and also turbulence thus giving a combined stirring and heating effect, and the stirring effect partially destroys ascorbate oxidase activity through mechanical processes in addition to the temperature dependent effects.

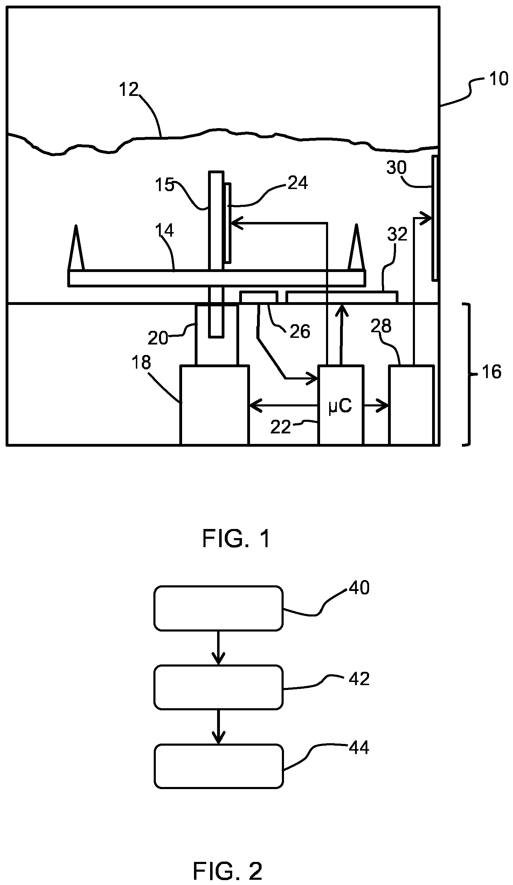

Fig. 1 shows a domestic food processing apparatus. The example shown is a blender, but the processing method may be applied to a juicer as well.

The apparatus comprises a vessel 10 for receiving food 12 for processing. This food is typically raw fruit and/or vegetables.

A rotary processing element 14 is mounted in the vessel 10, shown in this example as a blender blade. The apparatus has a base 16 beneath the vessel, to which the vessel is reversibly coupled. In the base 16 there is a motor 18 for driving the rotary processing element 14, including a gearing arrangement 20. In some other embodiments, the rotary processing element could be in other forms, like an extrusion screw in a slow juicer.

The base also houses an overall controller 22.

The controller 22 provides control of the motor 18 to provide control of the timing, duration and speed of the rotation.

The apparatus has a heating system 24 for heating the food in the vessel and a temperature sensor 26 for measuring the temperature of the food in the vessel.

The controller controls the heating system 24 to provide a food temperature in the range 50.0 to 75.0 degrees Celsius during or immediately after processing.

This heating process deactivates ascorbate oxidase so that it does not break down vitamin C after the fruit or vegetables have been processed. The temperature is high enough to provide deactivation of the ascorbate oxidase but not so high as to destroy the vitamin C by overheating.

The enzymatic degradation process is both temperature-dependent and time-dependent. At the relatively low end of the temperature range, partial enzyme activity still exits, and thus enzymatic degradation is the dominant pathway. At the relatively high end of the temperature range, enzyme activity is almost disabled, but there is however partial destruction of vitamin C by overheating. The particular temperature chosen may depend on the food item or user's preference for example. The temperature may be in the range 60.0 to 70.0 degrees Celsius.

A heating duration of 2 to 5 minutes is for example appropriate to enable the deactivation of the ascorbate oxidase, and thereby assist in retaining the maximum possible levels of vitamin C. The whole juicing or blending process typically lasts no more than 5 minutes, so the heating may be for the full duration of the process.

In the example shown, the heating system comprises a resistive heater which is positioned on the shaft 15 of the processing element 14. It may use electrical wires or a thin film heater, and is directly in contact with the food.

The heating system provides uniform heating while the processing element is rotating. The heater provides the desired mild heating effect, which causes a small and similar cavitation effect to deactivate the ascorbate oxidase.

Fig. 1 also shows a second heating system comprising an ultrasound generator 28 and transducer 30. The ultrasound may use continuous wave or pulsed wave generation. This ultrasound transducer generates heat and also turbulence. The ultrasound transducer 30 in this example is coupled to the inner wall of the vessel 10 close to the bottom to give rise to a turbulent stirring effect. The ultrasound system thus implements a combined stirring and heating effect. It functions to provide both heating and vibration, and the vibration creates a turbulent effect which has the benefit of partially destroying ascorbate oxidase activity through mechanical processes in addition to the temperature dependent effects.

The controller 22 controls the heating system 24 and the ultrasound system 28, 30 to provide the desired temperature. There is feedback control to maintain the desired temperature. The frequency and amplitude of the ultrasound system may be controlled to provide the desired temperature control, and the duty cycle or current of the electrical heating system may be controlled. The ultrasound system for example uses a frequency in the range 20kHz to 40kHz and a typical power of 50W to 60W.

Fig. 1 also shows a cooling system 32 for cooling the processed food after the heating process. The cooling system 32 is to cool the food temperature to temperature suitable for consumption. The cooling system may be implemented as a small semiconductor cooler provided at the inner wall or base of the vessel 10.

Note that heating using the ultrasound system is optional when resistive heating is applied. Furthermore, the cooling system is optional, as the user may instead simply place the processed food in a fridge for a specified time for it to reach the desired temperature for consumption.

It may be possible to use ultrasound heating alone, and avoid the need for resistive heating. Thus, the heating may be implemented using resistive heating, ultrasound or a combination of both. The combination of ultrasound and mild resistive heating is preferred.

The processing element may complete the food processing (blending or juicing) before the heating is complete. The processing element may then be slowed so that it instead performs primarily a stirring function.

The system of Fig. 1 is able to generate both a mechanical stirring/vibration function and local heating for generating local bubbles (i.e. small cavitation) which will rise and make contact with food cells. The high shear force and pressure accompanying cavitation in combination with the mild heating cause inactivation of the ascorbate oxidase. The stirring/vibration effect is for example able to shorten the required duration of the heating process to provide the required level of deactivation of the ascorbate oxidase. In particular, there is physical disruption and dissociation of the ascorbate oxidase, as well denaturation under pressure and heat conditions.

The invention relates to domestic appliances, for example having a vessel size of between 0.6 liters and 2.0 liters.

Fig. 2 shows a food processing method for implementation by a domestic apparatus. The method comprises driving a rotary food processing element within a vessel which contains the food to be processed in step 40.

In step 42, the food is heated to provide a food temperature in the range 50.0 to 75.0 degrees Celsius during or immediately after processing thereby to inactivate ascorbate oxidase by heating.

This method finds a balance between preventing destruction of vitamin C by heating and deactivating ascorbate oxidase to prevent destruction of the vitamin C. The heating of step 42 for example has a duration of 2 to 5 minutes and it may be based on ultrasonic vibration of the food and/or resistive heating of the food.

In step 44, there is optional active cooling of the processed food.

Some experimental results are presented below which show the effect of different processing conditions on the vitamin C content.

A first experiment aimed at showing the effect of heating. It made use of fresh orange juice. Each sample was obtained by placing half a fresh orange in a plastic bag, then squeezing the orange using a hammering process, until the orange was homogenously destroyed and had become a juice.

The bag was then soaked in a water bath with a controlled water temperature.

Eight samples were processed at different water temperatures, together with a control sample with no soaking. The control sample was at 8 degrees Celsius, as this was the core temperature after sample preparation, and this is listed in the table below as the "temperature of soaking" (although there was no prolonged soaking as mentioned above).

The vitamin C content was then analyzed in a laboratory using high performance liquid chromatography (HPLC).

The table below shows the results. For each sample, the soaking temperature and time are given, as well as the final vitamin C content, and the percentage retention compared to the control sample.

| Group | Temperature of soaking | Time of soaking | Vitamin C content (mg/100g) | Retention rate |
|---|---|---|---|---|
| 1 | 8°C | None | 45.20 | 100.00% |
| 2 | 15°C | 5 mins | 22.93 | 50.73% |
| 3 | 22°C | | 18.02 | 39.87% |
| 4 | 32°C | | 15.67 | 34.67% |
| 5 | 59°C | | 18.50 | 40.93% |
| 6 | 65°C | | 28.29 | 62.59% |
| 7 | 70°C | | 33.11 | 73.25% |
| 8 | 80°C | | 17.34 | 38.36% |
| 9 | 90°C | | 16.34 | 36.15% |

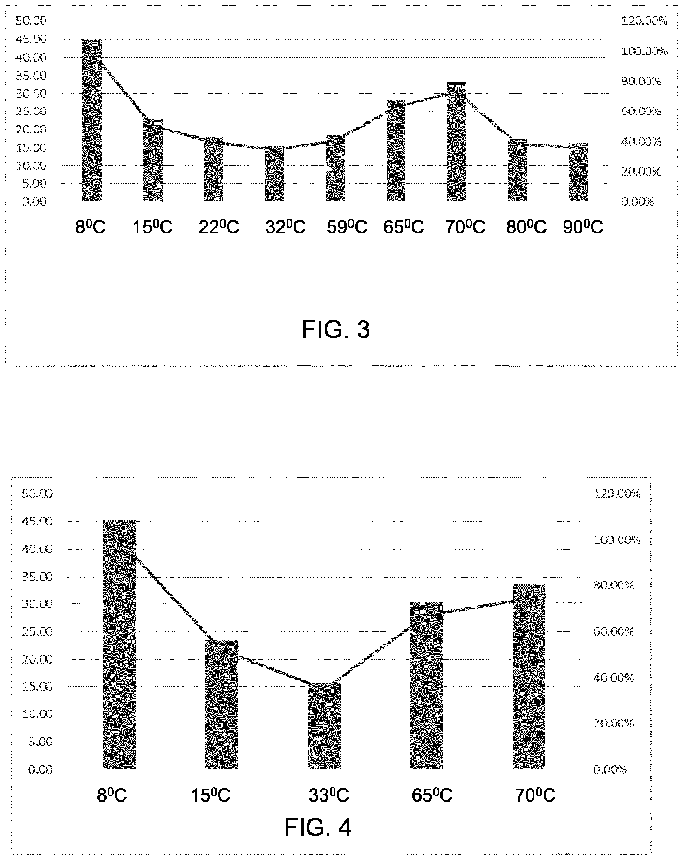

Fig. 3 shows the results. The bars show the vitamin C content (mg per 100g) using the y-axis scale on the left of the graph, and the line graph shows the corresponding retention rate as a percentage, using the y-axis scale on the right of the graph.

The peak retention can be seen for the temperature range between the samples at 59 degrees Celsius and 80 degrees Celsius. In particular, it has been found that a temperature range of 50 to 75 degrees Celsius is of particular interest, and more particularly the temperature range 60 to 70 degrees Celsius.

A second experiment aimed at showing the effect of ultrasound treatment. It involved preparing samples in the same way as explained above. After soaking, ultrasound exposure is performed to treat the orange juice, while soaking in tap water of 15 °C, for a further period of time.

The vitamin C content was then again analyzed in a laboratory using high performance liquid chromatography (HPLC).

The table below shows the results. For each sample, the soaking temperature and time are given, as well as the final vitamin C content, and the percentage retention compared to the control sample. Again, one control sample is present without ultrasound treatment. The soaking temperature was varied for a fixed soaking time. All samples other than the control sample were provided with the same ultrasound treatment.

| Group | Temperature of soaking | Time of soaking | Temp of US | Time of US | Vitamin C content (mg/100g) | Retention rate |
|---|---|---|---|---|---|---|
| 1 | 8°C | None | None | None | 45.20 | 100.00% |
| 2 | 15°C | 5 minutes | 15°C | 5 minutes | 23.53 | 52.06% |
| 3 | 33°C | | | | 15.78 | 34.91% |
| 4 | 65°C | | | | 30.37 | 67.19% |
| 5 | 70°C | | | | 33.65 | 74.45% |

Fig. 4 shows the results. The bars show the vitamin C content (mg per 100g) using the y-axis scale on the left of the graph, and the line graph shows the corresponding retention rate as a percentage, using the y-axis scale on the right of the graph.

The retention rate is slightly improved compared to the result of Fig. 3 at the same corresponding temperature. Thus, the retention is improved further by providing ultrasonic vibration even when at a temperature of 15 degrees Celsius.

A third experiment aimed at showing the relationship between heating time and temperature. It again made use of fresh orange juice prepared and analyzed in the manner explained above.

The table below shows the results. For each sample, the soaking temperature and time are given, as well as the final vitamin C content, and the percentage retention compared to the control sample. The soaking time was varied for a fixed soaking temperature of 70°C.

| Group | Temperature of soaking | Time of soaking | Vitamin C content (mg/100g) | Retention rate |
|---|---|---|---|---|
| 1 | 8°C | None. | 47.20 | 100.00% |
| 2 | 70°C | 1 minute | 19.06 | 42.17% |
| 3 | 70°C | 2 minutes | 23.70 | 52.43% |
| 4 | 70°C | 4 minutes | 31.89 | 70.55% |

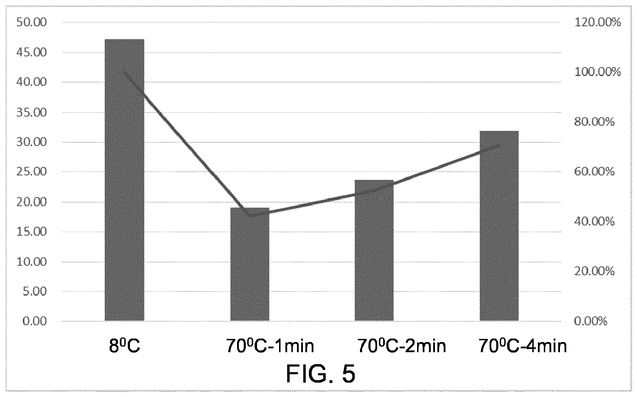

Fig. 5 shows the results. The bars show the vitamin C content (mg per 100g) using the y-axis scale on the left of the graph, and the line graph shows the corresponding retention rate as a percentage, using the y-axis scale on the right of the graph.

These results show that increased heating times, at a given temperature, improve the retention of vitamin C.

These experiments show the beneficial effects of the processing method and apparatus for retaining vitamin C in freshly prepare fruit and vegetable juices.

The invention relates to the preparation of food for immediate consumption, without cooking, and for use by domestic users. The heating process is thus not intended for cooking the food, and it is generally for consumption cold (either at room temperature or slightly chilled). It may be used for example for preparing juice drinks and smoothies or foods based on fruit or vegetable juice (and optionally pulp).

The apparatus is a stand-alone domestic appliance for use in the kitchen.

As discussed above, the apparatus makes use of a controller. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, the controller may be associated with one or more storage media such as volatile and non-volatile computer memory such as RAM, PROM, EPROM, and EEPROM. The storage media may be encoded with one or more programs that, when executed on one or more processors and/or controllers, perform at the required functions. Various storage media may be fixed within a processor or controller or may be transportable, such that the one or more programs stored thereon can be loaded into a processor or controller.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

Any reference signs in the claims should not be construed as limiting the scope.

## Claims

1. A domestic apparatus, comprising:
a vessel (10) for receiving food (12) for processing;
a rotary processing element (14) mounted in the vessel;
a motor (18) for driving the rotary processing element;
a heating system (24);
a temperature sensor (26); and
a controller (22),
wherein the controller (22) is adapted to control the heating system to provide a food temperature in the range 50.0 to 75.0 degrees Celsius during or immediately after processing;
**characterised in that** it further comprises an ultrasonic vibration arrangement (28, 30) for vibrating the food.

2. An apparatus as claimed in claim 1, wherein the controller (22) is adapted to control the heating system to provide a food temperature in the range 60.0 to 70.0 degrees Celsius.

3. An apparatus as claimed in claim 1 or 2, wherein the controller (22) is adapted to control the heating system to provide heating during a heating time of 2 to 5 minutes.

4. An apparatus as claimed in any preceding claim, further comprising a cooling system (32) for cooling the processed food after the heating process.

5. An apparatus as claimed in any preceding claim, wherein the ultrasonic vibration arrangement comprises an ultrasound transducer (30) coupled to the vessel.

6. An apparatus as claimed in claim 5, wherein the controller (22) is adapted to control the ultrasonic vibration arrangement (28, 30) in a pulsed mode.

7. An apparatus as claimed in any preceding claim, wherein the heating system (24) comprises a resistive heater.

8. An apparatus as claimed in claim 7, wherein the resistive heater is coupled to the rotary processing element (14).

9. An apparatus as claimed in any one of claims 1 to 6, wherein the heating system is implemented by the ultrasonic vibration system.

10. An apparatus as claimed in claim 1, wherein the vessel (10) has a volume of between 0.6 and 2.0 liters.

11. A food processing method for implementation by a domestic apparatus, comprising:
driving a rotary food processing element (14) within a vessel (10) which contains the food (12) to be processed; and
heating the food to provide a food temperature in the range 50.0 to 75.0 degrees Celsius during or immediately after processing thereby to inactivate ascorbate oxidase by heating; and
vibrating the food using an ultrasonic vibration arrangement (28, 30).

12. A method as claimed in claim 11, comprising providing a food temperature in the range 60.0 to 70.0 degrees Celsius.

13. A method as claimed in claim 11 or 12, comprising controlling the heating system to provide heating during a heating time of 2 to 5 minutes.

14. A method as claimed in any one of claims 11 to 13, further comprising cooling the processed food after the heating process.

15. A method as claimed in any one of claims 11 to 14, comprising heating by using said ultrasonic vibration of the food and/or using resistive heating of the food.

## Patentansprüche

1. Haushaltsvorrichtung, umfassend:
einen Behälter (10) zur Aufnahme von Nahrungsmitteln (12) zur Verarbeitung;
ein rotierendes Verarbeitungselement (14), das in dem Behälter montiert ist;
einen Motor (18) zum Antreiben des rotierenden Verarbeitungselements;
ein Heizsystem (24);
einen Temperatursensor (26);
und
eine Steuerung (22),
wobei die Steuerung (22) angepasst ist, um das Heizsystem zu steuern, um eine Nahrungsmitteltemperatur im Bereich von 50,0 bis 75,0 Grad Celsius während oder unmittelbar nach der Verarbeitung bereitzustellen;
**dadurch gekennzeichnet, dass** es weiter eine Ultraschall-Schwingungsanordnung (28, 30) umfasst, um die Nahrungsmittel in Schwingung zu versetzen.

2. Vorrichtung nach Anspruch 1, wobei die Steuerung (22) angepasst ist, um das Heizsystem zu steuern, um eine Nahrungsmitteltemperatur im Bereich von 60,0 bis 70,0 Grad Celsius bereitzustellen.

3. Vorrichtung nach Anspruch 1 oder 2, wobei die Steuerung (22) angepasst ist, um das Heizsystem zu steuern, um während einer Erwärmungszeit von 2 bis 5 Minuten eine Erwärmung bereitzustellen.

4. Vorrichtung nach einem der vorstehenden Ansprüche, weiter umfassend ein Kühlsystem (32) zum Kühlen der verarbeiteten Nahrungsmittel nach dem Erwärmungsprozess.

5. Vorrichtung nach einem der vorstehenden Ansprüche, wobei die Ultraschall-Schwingungsanordnung einen Ultraschallwandler (30) umfasst, der mit dem Behälter gekoppelt ist.

6. Vorrichtung nach Anspruch 5, wobei die Steuerung (22) angepasst ist, um die Ultraschall-Schwingungsanordnung (28, 30) in einem Impulsbetrieb zu steuern.

7. Vorrichtung nach einem der vorstehenden Ansprüche, wobei das Heizsystem (24) ein Widerstandsheizelement umfasst.

8. Vorrichtung nach Anspruch 7, wobei das Widerstandsheizelement mit dem rotierenden Verarbeitungselement (14) gekoppelt ist.

9. Vorrichtung nach einem der Ansprüche 1 bis 6, wobei das Heizsystem durch das Ultraschall-Schwingungssystem implementiert ist.

10. Vorrichtung nach Anspruch 1, wobei der Behälter (10) ein Volumen zwischen 0,6 und 2,0 Litern aufweist.

11. Nahrungsmittelverarbeitungsverfahren zur Implementierung durch eine Haushaltsvorrichtung, umfassend:
Antreiben eines rotierenden Nahrungsmittelverarbeitungselements (14) innerhalb eines Behälters (10), der die zu verarbeitenden Nahrungsmittel (12) enthält; und
Erwärmen der Nahrungsmittel, um eine Nahrungsmitteltemperatur im Bereich von 50,0 bis 75,0 Grad Celsius während oder unmittelbar nach der Verarbeitung bereitzustellen, um dadurch Ascorbatoxidase durch Erwärmen zu inaktivieren; und
In Schwingung versetzen der Nahrungsmittel unter Verwendung einer Ultraschall-Schwingungsanordnung (28, 30).

12. Verfahren nach Anspruch 11, umfassend das Bereitstellen einer Nahrungsmitteltemperatur im Bereich von 60,0 bis 70,0 Grad Celsius.

13. Verfahren nach Anspruch 11 oder 12, umfassend das Steuern des Heizsystems zum Bereitstellen von Wärme während einer Erwärmungszeit von 2 bis 5 Minuten.

14. Verfahren nach einem der Ansprüche 11 bis 13, weiter umfassend das Kühlen der verarbeiteten Nahrungsmittel nach dem Erwärmungsprozess.

15. Verfahren nach einem der Ansprüche 11 bis 14, umfassend das Erwärmen der Nahrungsmittel unter Verwendung der Ultraschallschwingung und/oder das Verwenden der Widerstandserwärmung der Nahrungsmittel.

## Revendications

1. Appareil ménager, comprenant :
un récipient (10) pour recevoir des aliments (12) à traiter ;
un élément de traitement rotatif (14) monté dans le récipient ;
un moteur (18) pour entraîner l'élément de traitement rotatif ;
un système de chauffage (24) ;
un capteur de température (26) ;
et
un dispositif de commande (22),
dans lequel le dispositif de commande (22) est adapté pour commander le système de chauffage pour fournir une température d'aliments dans la plage de 50,0 à 75,0 degrés Celsius pendant ou immédiatement après le traitement ;
**caractérisé en ce qu'**il comprend en outre un agencement à vibrations ultrasonores (28, 30) pour faire vibrer les aliments.

2. Appareil selon la revendication 1, dans lequel le dispositif de commande (22) est adapté pour commander le système de chauffage pour fournir une température d'aliments dans la plage de 60,0 à 70,0 degrés Celsius.

3. Appareil selon la revendication 1 ou 2, dans lequel le dispositif de commande (22) est adapté pour commander le système de chauffage pour fournir un chauffage pendant un temps de chauffage de 2 à 5 minutes.

4. Appareil selon une quelconque revendication précédente, comprenant en outre un système de refroidissement (32) pour refroidir les aliments traités après le processus de chauffage.

5. Appareil selon une quelconque revendication précédente, dans lequel l'agencement à vibrations ultrasonores comprend un transducteur ultrasonique (30) couplé au récipient.

6. Appareil selon la revendication 5, dans lequel le dispositif de commande (22) est adapté pour commander l'agencement à vibrations ultrasonores (28, 30) dans un mode pulsé.

7. Appareil selon une quelconque revendication précédente, dans lequel le système de chauffage (24) comprend une résistance chauffante.

8. Appareil selon la revendication 7, dans lequel la résistance chauffante est couplée à l'élément de traitement rotatif (14).

9. Appareil selon l'une quelconque des revendications 1 à 6, dans lequel le système de chauffage est mis en œuvre par le système à vibrations ultrasonores.

10. Appareil selon la revendication 1, dans lequel le récipient (10) a un volume entre 0,6 et 2,0 litres.

11. Procédé de traitement des aliments pour mise en œuvre par un appareil ménager, comprenant :
l'entraînement d'un élément de traitement d'aliments rotatif (14) dans un récipient (10) qui contient les aliments (12) à traiter ; et
le chauffage des aliments pour fournir une température d'aliments dans la plage de 50,0 à 75,0 degrés Celsius pendant ou immédiatement après le traitement inactivant ainsi l'ascorbate oxydase par chauffage ; et
la mise en vibration des aliments en utilisant un agencement à vibrations ultrasonores (28, 30).

12. Procédé selon la revendication 11, comprenant la fourniture d'une température d'aliments dans la plage de 60,0 à 70,0 degrés Celsius.

13. Procédé selon la revendication 11 ou 12, comprenant la commande du système de chauffage pour fournir un chauffage pendant un temps de chauffage de 2 à 5 minutes.

14. Procédé selon l'une quelconque des revendications 11 à 13, comprenant en outre le refroidissement des aliments traités après le processus de chauffage.

15. Procédé selon l'une quelconque des revendications 11 à 14, comprenant le chauffage en utilisant ladite vibration ultrasonore des aliments et/ou en utilisant le chauffage par résistance des aliments.
